# EUROPÄISCHE PATENTSCHRIFT

(11) **EP 2 345 503 B1**
(45) Veröffentlichungstag und Bekanntmachung des Hinweises auf die Patenterteilung: **18.03.2015**
(21) Anmeldenummer: 11000218.5
(22) Anmeldetag: 13.01.2011
(51) Int. Cl.: B23Q 1/01

(54) **Werkzeugmaschine**
Machine tool
Machine-outil

(30) Priorität: 19.01.2010 DE 102010004990
(43) Veröffentlichungstag der Anmeldung: 20.07.2011
(73) Patentinhaber: Deckel Maho Seebach GmbH, 99846 Seebach (DE)
(72) Erfinder: Brand, Matthias, Dipl.-Ing., 99846 Seebach (DE); Tüllmann, Udo, Dr.-Ing., 99817 Eisenach (DE)
(74) Vertreter: Beetz & Partner mbB

(56) Entgegenhaltungen:
- EP-A1- 1 747 843
- EP-A1- 2 263 827
- DE-A1- 4 444 614
- DE-A1- 10 139 296
- DE-B3-102004 049 525
- US-A1- 2004 121 890
- US-A1- 2006 270 540

## Beschreibung

Die Erfindung betrifft eine Werkzeugmaschine nach dem Oberbegriff des Anspruchs 1 oder 2 (siehe, z.B., EP-1747843).

Werkzeugmaschinen dieses Typs mit zwei formsteifen parallelen Seitenwänden, einem auf der Oberseite der Seitenwände an Führungen verfahrbaren Querschlitten und einer frontseitigen mit Spanwer k-zeugen bestückbaren Bearbeitungseinheit werden als sog. Gantry-Maschinen bezeichnet. In der Regel bildet bei diesem Maschinentyp der in der Y-Koordinatenachse an parallelen Führungsschienen auf den beiden Seitenwänden fahrende Querschlitten eine Traverse und trägt einen in der X-Koordinatenachse verfahrbaren Längsschlitten. An diesem Längsschlitten kann ein in der Z-Koordinatenachse verfahrbarer Vertikalschlitten als Träger einer Bearbeitungseinheit g e-führt sein. Als Werkstückaufnahmeeinheit für ein oder mehrere zu bearbeitende Werkstücke wird meist ein Werkstücktisch eingesetzt, der im Raum zwischen den beiden Seitenwänden auf dem Masch i-nenbett montiert ist.

Um mehrachsige und mehrseitige Bearbeitungsmöglichkeiten eines Werkstücks in einer Aufspannung zu erzielen, kann bei komplex e-ren Maschinen dieses Typs der Werkstücktisch als drehangetriebener Rundtisch ausgebildet sein. Ein formstabiler bettartiger Boden verbindet die beiden Seitenwände zu einer formsteifen Gesamtko n-struktion mit günstigem Temperatur- bzw. Wärmeverhalten. Bei herkömmlichen Maschinen dieses Typs ist auf dem bettartigen Boden die Werkstückaufnahmeeinheit meist in Form einer Dreh- bzw. Schwenktischkonstruktion montiert. Einer der besonderen Vorteile der Gantry-Bauweise liegt in der hohen Steifigkeit des Maschinengestells, was höchste Bearbeitungsgenauigkeiten sowie auch hohe statische und dynamische Belastungen und entsprechend hohe Spanleistungen ermöglicht. Ferner wirkt sich der symmetrische Aufbau des Maschinengestells günstig auf das Temperaturverhalten der G e-samtmaschine aus. Nachteilig bei diesem Maschinentyp ist allerdings eine begrenzte Zugänglichkeit des Werkstücktisches zum Einund Ausbringen von Werkstücken. Beschränkt wird der Zugang zum Arbeitsraum bei herkömmlichen Gantry-Maschinen durch die Vorderteile der beiden Seitenwände, sodass die Be- und Entladung stets direkt von vorne erfolgen muss.

Ferner sind auch Werkzeugmaschinen, z.B. aus der DE 10 2006 034 123 B4, bekannt, deren Maschinengestell zwei Seitenwände und ein bodenartiges Bett aufweist, die fest miteinander verbunden sind. Auf den Seitenwänden sind über Linearführungen eine Schlittenkonstruktion und an dieser eine Bearbeitungseinheit in drei Koordinatenachsen verfahrbar angeordnet. Zur Erzielung e i-ner 5-Achs-Bearbeitungsmöglichkeit eines Werkstückes ist zwischen den beiden Seitenwänden ein Schwenkbrückentisch vorgesehen, dessen Schwenkbrücke in zwei endseitigen stabilen Traglagern in den Seitenwänden des Maschinengestells um eine horizontale Querachse verschwenkbar gelagert ist. Zur Ausführung der Schwenkbewegungen werden zwei elektrisch synchronisierte Direktantriebe, vorzugsweise Torque-Motoren, eingesetzt. In dem Brückenteil zwischen den beiden Traglagem ist ein Drehtisch angeordnet, der um eine vertikale Mittelachse drehen kann und der zur fixierten Aufnahme eines Werkstücks dient. Bei dieser Maschine ist die Schwenkbrücke des Schwenkbrückentisches nicht direkt in den beiden Seitenwänden des Maschinengestells, sondern in zwei Schlitten gelagert, wobei diese Schlitten synchron auf Linearführungen an den Innenseiten der beiden Seitenwände des Maschinengestells verfahrbar sind. Als Fahrantriebe dienen zwei elektrisch synchronisierte Linearmotoren, deren elektrisch wirksame Bauteile zwischen den Schlitten und den Seitenwänden angeordnet sind. Durch die Verfahrbarkeit der Schwenkbrücke in Richtung der Y-Koordinatenachse wird die Zugänglichkeit zum Werkstücktisch verbessert, was allerdings nur durch Inkaufnahme eines u.a. durch die linearen Verstellantriebe der Schwenkbrückenkonstruktion verursachten höheren technischen Aufwandes erreicht wird. Darüber hinaus bereitet die Integration von leistungsfähigen elektrischen Direktantrieben in den mittleren Brückenteil der Schwenkbrücke zum Erhalt eines leistungsfähigen Drehantriebes des Drehtisches Schwierigkeiten, da nur ein begrenzter Platz für den E-Motor zur Verfügung steht. Durch die Aufnahme der Schwenkachse in den beiden Traglagern in den Seitenwänden des Gestells kann eine ausreichend hohe Steifigkeit auch bei großen Durchmessern der Werkzeugtische erzielt werden. Nachteilig ist jedoch der hohe Einsatz an Material und der relativ große Platzbedarf für die Schwenkbrücke. Beim Umschlag auf die 90°-Position des Werkstückträgers kann es zu einer Einschränkung des Arbeitsraums und ggf. auch zu einer verminderten Steifigkeit der Gesamtkonstruktion kommen.

Neben den Werkzeugmaschinen in Gantry-Bautweise sind auch komplexe Werkzeugmaschinen bzw. Bearbeitungszentren zur mehrachsigen, insbesondere zur 5-achsigen Bearbeitung von Werkstücken bekannt, die über drei kartesisch angeordnete Linearachsen sowie über zwei Rundachsen verfügen. Die Bearbeitungseinheit ist oberseitig an einem Maschinengestell in einer Horizontalebene in den X- und Y-Achsen über einen Kreuzschlittten motorisch verfahrbar und an der Vorderseite der Tischkonstruktion über einen Vertikalschlitten in der Z-Achse verfahrbar montiert. Eine aus der DE-A-196 41 831 bekannte Werkzeugmaschine dieses Typs weist in ihrer vertikalen Stirnwand eine kreisförmige Ausnehmung auf, in welcher der kreisförmige Fuß einer Tragkonsole um eine horizontale Achse mittels einer geeigneten Lagerkonstruktion motorisch verdrehbar gelagert ist. Der kreisscheibenförmige Konsolenfuß ist Teil einer auskragenden Tragkonsole, die in ihrem freien Endbereich eine zur Drehachse parallel verlaufende Auflagefläche zur Lagerung eines Drehtisches aufweist. Der mit Spann-Nuten zur Fixierung eines Werkstückes versehene Drehtisch kann von einem geeigneten Antriebsaggregat direkt oder über Getriebemittel angetrieben werden. Aufgrund von sich widersprechenden Anforderungen für eine dynamische interpolierende Bearbeitung liegt der Kreuzungspunkt der beiden Drehachsen relativ weit oberhalbe der Tischfläche. Dies bedeutet, dass beim Umschlag des Werkstücktisches auf die vertikale 90°-Stellung ein relativ großer Teil des Arbeitsraums verlorengeht und bei der 5-Achs-Bearbeitung relativ große Linearbewegungen der Bearbeitungseinheit in dem XYZ-Koordinatensystem ausgeführt werden müssen. Darüber hinaus kann sich auch eine Änderung der Durchbiegung des auskragenden Konsolenteils durch Eigengewicht und durch Werkstückgewicht bei der Drehung um die horizontale Schwenkachse nachteilig auswirken. Da sich die Richtung des Kraftangriffes ändert, ergeben sich andere Verformungsbedingungen.

Daneben ist aus der DE 44 44 614 A eine Werkzeugmaschine zur 5-Achs-Bearbeitung von Werkstücken bekannt, bei welcher in der Frontseite eines durchgehenden Maschinenständers eine Ausnehmung mit einer um 45° geneigten Auflagefläche ausgebildet ist. Auf dieser unter einem Winkel von 45° zur Vertikalen geneigten Auflagefläche liegt ein kreisförmiger bzw. kreisringförmiger Fuß einer Konsole auf, die einen nach vorn weisenden Tragansatz mit einer um 45° zur Drehachse des Konsolenfußes ausgerichteten Drehachse aufweist. Auf dieser Tragfläche ist ein Drehtisch um eine Vertikalachse verdrehbar gelagert, der Spannmittel zum Fixieren eines Werkstücks an seiner Oberseite enthält.

Die DE 10 2004 049 525 A beschreibt eine ähnlich konzipierte Werkzeugmaschine, bei welcher der Konsolenfuß nicht in einer Ausnehmung bzw. auf einem stirnseitigen Sockel des Maschinenständers mittig angeordnet ist, sondern zur Mitte des Maschinenständers seitlich versetzt ist und sich in einem Eckbereich an der Frontseite des Maschinenständers befindet und dort auf der 45°-Schrägfläche eines Sockels verschwenkbar abgestützt ist. Diese Anordnung ermöglicht eine überkippte Lage des Drehtisches und damit negative Lagewinkel zur vertikalen Z-Achse. Bei dieser Ausführung besteht die Besonderheit, dass für den durchschwenkenden Werkstücktisch eine entsprechende Aussparung im Maschinenbett vorgesehen werden muss, was die Anordnung und Auswahl von leistungsfähigen Direktantrieben beeinträchtigt, da z.B. für die Drehbearbeitung größerer Werkstücke benötigte Direktantriebe entsprechende Abmessungen, insbesondere ausreichende Bauhöhen, verlangen.

Aufgabe der Erfindung ist es, eine programmgesteuerte Werkzeugmaschine mit hoher Steifigkeit in Gantry-Bauweise zu schaffen, die eine 5-Achs-Fräs- und -Dreh-Bearbeitung auch von größeren und sperrigen Werkstücken sowie auch einen vergrößerten und damit verbesserten Zugang zum Arbeitsraum ermöglicht.

Diese Aufgabe wird erfindungsgemäß durch die Merkmale eines der Patentansprüche 1 bzw. 2 gelöst.

Durch die spitzwinklige Schrägstellung der beiden Linearführungen zur vertikalen Mittellängsebene des Maschinengestells wird erreicht, dass der auf den Linearführungen verfahrbare Querschlitten in einer Richtung verfährt, die zur vertikalen Längsebene des Maschinengestells bzw. zur Y-Koordinatenachse unter einem spitzen Winkel schräg verläuft. Da zusätzlich zur Schrägausrichtung der Linearführungen bzw. der Führungsschienen die eine Seitenwand um einen vorgegebenen Betrag kürzer als die andere Seitenwand des Maschinengestells ist, ergibt sich eine um einen seitlichen Bereich vergrößerte Zugangsöffnung zum Arbeitsraum der Maschine, d.h. zu dem Spannmittel der Werkstückaufnahme. Dieses Spannmittel besteht in der Regel aus der Spannplatte eines Drehtisches, kann jedoch auch ein Spannfutter zum Einspannen von drehsymmetrischen Werkstücken sein. Die erfindungsgemäße Schrägstellung der Linearführungen behebt somit den Nachteil herkömmlicher Werkzeugmaschinen vom Gantry-Typ der relativ begrenzten Zugänglichkeit der zu bearbeitenden Werkstücke, wobei die Vorteile dieses Maschinentyps, insbesondere die hohe Steifigkeit und Bearbeitungsgenauigkeit, erhalten bleiben.

Eine gattungsgemäße Werkzeugmaschine zeichnet sich gemäß einem anderen Aspekt der Erfindung noch dadurch aus, dass die beiden Linearführungen parallel zur vertikalen Längsebene V des Maschinengestells und damit zur Y-Koordinatenachse verlaufen, die vordere Stirnkante des Querschlittens unter einem spitzen Winkel schräg zur vertikalen Querebene des Maschinengestells und damit zur X-Koordinatenachse verläuft, und die eine Seitenwand des Maschinengestells kürzer als die andere Seitenwand ist, wodurch ein vergrößerter Zugang zum Werkstücktisch bzw. zum Arbeitsraum der Maschine entsteht. Auch bei einer derart ausgebildeten Gantry-Maschine ergeben sich die angestrebten Vorzüge eines vergrößerten Zugriffsbereichs zum Arbeitsraum bei konstruktiv einfachem Aufbau und hoher Steifigkeit. Der größere Zugang von vorne und schrägvorne ermöglicht den Einsatz von mechanischen Ladevorrichtungen, wie mobile oder stationäre Laderoboter, Manipulatoren, Kräne od. dgl., um auch größere und schwerere Werkstücke auf dem Werkstücktisch zu positionieren.

Gemäß einer zweckmäßigen Ausgestaltung der Erfindung weist das Maschinengestell zwei vertikale Seitenwände mit den oberseitigen Linearführungen, einen bettartigen Unterbau sowie eine mit den beiden Seitenwänden und mit dem Unterbau fest verbundene formstabile Rückwand auf. Zweckmäßig ist die Werkstückaufnahme an bzw. auf dem bettartigen Unterbau zwischen den beiden Seitenwänden des Maschinengestells angeordnet und zwar vorzugsweise auf einem Sockel, der mit einer der Seitenwände und/oder mit der formstabilen Rückwand fest verbunden ist. Durch diese Ausgestaltung erhält das Maschinengestell eine extrem hohe Steifigkeit, da die einzelnen Gestellelemente zu einem in sich starren einheitlichen Formkörper integriert als Gussteil oder Schweißkonstruktion ausgeführt sein können.

Für die Anwendung der erfindungsgemäßen Werkzeugmaschine bei schweren Schrupparbeiten mit hohem Späneanfall ist es zweckmäßig, eine Bodenwanne als Teil des bettartigen Unterbaus vorzusehen, die als Spänesammler dient. In dieser Bodenwanne können herkömmliche Transport- und Reinigungseinrichtungen für die Behandlung und den Austrag von Spänen und Flüssigkeiten vorgesehen sein.

Bei einer weiteren zweckmäßigen Ausgestaltung der Erfindung hat der auf den Linearführungen der Seitenwände verfahrbar abgestütze Querschlitten eine - in Draufsicht - Trapezform, wobei die kürzere Auflageseite des Querschlittens der kürzeren Linearführung und die längere Auflageseite des Querschlittens der längeren Linearführung zugehört. Die Vergrößerung der Linearführung an einer Seitenwand des Maschinengestells führt zu einer erhöhten Quersteifigkeit der beiden Linearführungen insgesamt und damit zu einer erhöhten Genauigkeit auch bei Verfahrbewegungen unter hohen Betriebslasten. Dabei sollte die Stirnseite des trapezförmigen Querschlittens bei einer Ausführungsform rechtwinklig zu den beiden Linearführungen auf den Seitenwänden verlaufen und damit schräg zur vertikalen Längsebene des Maschinengestells unter den gleichen spitzen Winkeln ausgerichtet sein. Dies wirkt sich günstig auf den stellerungstechnischen Aufwand aus.

In vorteilhafter Ausgestaltung der Erfindung ist die zwischen den beiden Seitenwänden angeordnete Werkstückaufnahmeeinheit zur Halterung und Fixierung mindestens eines Werkstücks als Schwenk-Dreh-Tisch ausgebildet und weist eine schwenkbare Konsole auf, die ein abgewinkeltes Auflager für einen Werkstück-Drehtisch bildet.

Eine derartige Werkzeugmaschine verwirklicht die Kombination der Gantry-Bauweise mit einem Schwenk-Dreh-Tisch, was die 5-Achs-Bearbeitung von Werkstücken ermöglicht, und zwar unter Beibehaltung der durch die Gantry-Bauweise erzielten Vorteile einer hohen Steifigkeit und Bearbeitungsgenauigkeit. Die gegenüber herkömmlichen Maschinen vom Gantry-Typ erzielten Vorteile einer verbesserten Zugänglichkeit zum Arbeitsraum werden erfindungsgemäß erzielt durch die Schrägstellung der Linearführungen des Querschlittens oder durch die schräge Ausrichtung der vorderen Stirnkante des in Richtung der Y-Koordinatenachse verfahrbaren Querschlittens, und durch Verkürzung einer der Seitenwände des Maschinengestells.

Besonders stabile und günstige Positioniermöglichkeiten für die Werkstückaufnahme ergeben sich bei einer zweckmäßigen Ausgestaltung dann, wenn auf einem bettartigen Unterbau des Maschinengestells ein Sockel als Träger für die Konsole der Werkstückaufnahme vorgesehen ist, der eine unter einem spitzen Winkel geneigte Schrägfläche als Auflagefläche für den Konsolenfuß der Konsole aufweisen sollte.

Eine besonders hohe Steifigkeit der Gesamtkonstruktion lässt sich dadurch erzielen, dass der Sockel mit dem Unterbau bzw. mit dem Boden und mit mindestens einer der Gestellwände, d.h. einer der Seitenwände und / oder der Rückwand, fest verbunden ist. Besond e-re Vorzüge bezüglich Festigkeit und Formstabilität ergeben sich dann, wenn der Sockel in einem Eckbereich des Maschinengestells angeordnet und mit den angrenzenden Bauteilen einstückig ausgeführt bzw. fest verbunden ist, wobei seine Auflagefläche für den Konsolenfuß schräg in den vorderen Innenraum weisen sollte.

Weiterhin ist es vorteilhaft, wenn die Konsole des Schwenk -Dreh-Tisches mittels ihres Konsolenfußes in oder an einer Seitenwand oder der Rückwand des Maschinengestells um eine Horizontalachse verschwenkbar gelagert und gehalten ist. Dabei kann in der einen Seiten- oder der Rückwand des Maschinengestells eine zum Innenraum hin offene Ausnehmung vorgesehen sein.

Die Kombination des Schwenk-Dreh-Tisches mit einem Maschinengestell der Gantry-Bauweise ergibt die für die Maschinen mit Schwenk-Dreh-Tisch charakteristische gute Zugänglichkeit und gute Dynamik durch die Tisch-Kinematik sowie daneben auch die für Maschinen vom Gantry-Typ charakteristische hohe Steifigkeit und Genauigkeit, die höheren Tischbelastungen und insbesondere auch die Möglichkeit der problemlosen Durchführung von Fräs- und Dreharbeiten an einem Werkstück. Die Verbesserung der Masch i-nensteifigkeit wird dadurch erzielt, weil nur noch der Z-Schlitten mit veränderlichen Auskragungen im Arbeitsraum der Maschine beweglich ist. Aus dem gleichen Grund verbessert sich die Genauigkeit bei der dynamischen Fräsbearbeitung, da aufgrund der höheren schlittenseitigen Steifigkeiten eine bessere Bahngenauigkeit bei höheren Vorschüben und einer höheren Achsverstärkung möglich wird. Zur Verbesserung der Bearbeitungsgenauigkeit und auch der Maßstab i-lität der Maschine trägt bei, dass große Teile des Wärmeganges stets durch Verformungen der Schlitten mit veränderlichen Auskragungen infolge von einseitiger Erwärmung durch Antriebe und Führungen verursacht werden, was bei der neuen Maschine nicht oder nur in begrenztem Maß der Fall ist. Das kombinatorische Konzept eröffnet auch die Möglichkeit unterhalb des Maschinentisches Direktantriebe für den Drehtisch in Form von leistungsstarken Torque-Motoren vorzusehen, da die Gestaltung des Maschinenbettes und die geänderte Führungsanordnung ein Schwenken des Tisches ermöglicht, ohne dass es zu einer unerwünschten Durchbiegung kommt.

Gegenstand der Erfindung ist auch eine Werkzeugmaschine i n Gantry-Bauweise, bei der das Maschinengestell zwei Seitenwände und darauf zwei Linearführungen aufweist, die sich in Richtung der Y-Koordinatenachse erstrecken. Auf diesen Linearführungen ist ein Querschlitten motorisch in Y-Richtung verfahrbar angeordnet, auf dem Längsschlitten mit daran vertikal verfahrbarer Bearbeitung s-einheit geführt sind. Die Stirnkante des Querschlitten verläuft unter einem spitzen Winkel schräg zur X-Koordinatenachse bzw. zur vertikalen Querebene des Maschinengestells. Weiterhin i st eine Seitenwand des Maschinengestells kürzer als die andere Stirnwand, wodurch ein vergrößerter Zugang zum Werkstücktisch bzw. zum Arbeitsraum der Maschine entsteht. Zum Erhalt einer verbesserten Führung hat der Querschlitten eine - in Draufsicht - Trapezform. Auch bei einer derartig ausgebildeten Werkzeugmaschine können die verschiedenartigen Werkstückaufnahmen, wie z.B. die vorstehend genannten Schwenk-, Dreh-Werkstücktische eingesetzt werden. Die insbesondere durch die Kombination der verschiedenen Werkstückaufnahmen bzw. Werkstück-Schwenk-Dreh-Tische mit der Gantry-Bauweise lassen sich auch bei Maschinen nach dem in vorstehender Weise abgewandelten Gantry-Konzept gemäß der Erfindung erzielen.

Im Folgenden werden bevorzugte Ausführungsbeispiele der E rfindung anhand der Zeichnung im Einzelnen beschrieben. Es zeigen:
Fig. 1a-c schematisch ein erstes Ausführungsbeispiel der erfi n-dungsgemäßen Werkzeugmaschine, a) in perspektivischer Darstellung, b) in Frontansicht und c) in Draufsicht;
Fig. 2a,b schematisch ein weiteres Ausführungsbeispiel der erfindungsgemäßen Werkzeugmaschine, a) in perspektivischer Darstellung und b) in Draufsicht;
Fig. 3-6 weitere Ausführungsbeispiele der erfindungsgemäßen Werkzeugmaschine in schematischer perspektivischer Darstellung mit einem Schwenk-Dreh-Werkstücktisch in unterschiedlichen Anordnungen;
Fig. 7 ein weiteres Ausführungsbeispiel der erfindungsgemäßen Werkzeugmaschine in schematischer Darstellung mit einem starren Konsol-Werkstücktisch und mit einer in drei Linearachsen und zwei Rundachsen bewegbaren Bearbe i-tungseinheit und
Fig. 8 ein weiteres Ausführungsbeispiel für eine Werkzeugau f-nahme der erfindungsgemäßen Werkzeugmaschine, die hier als ein in eine Schwenkkonsole integriertes drehangetriebenes Spannfutter ausgebildet ist.

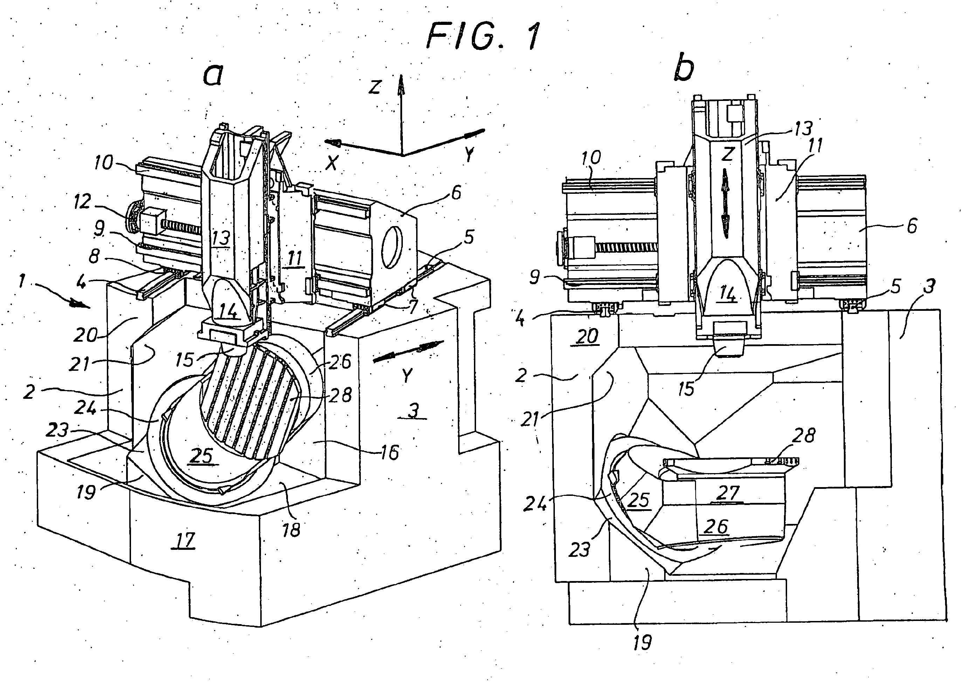

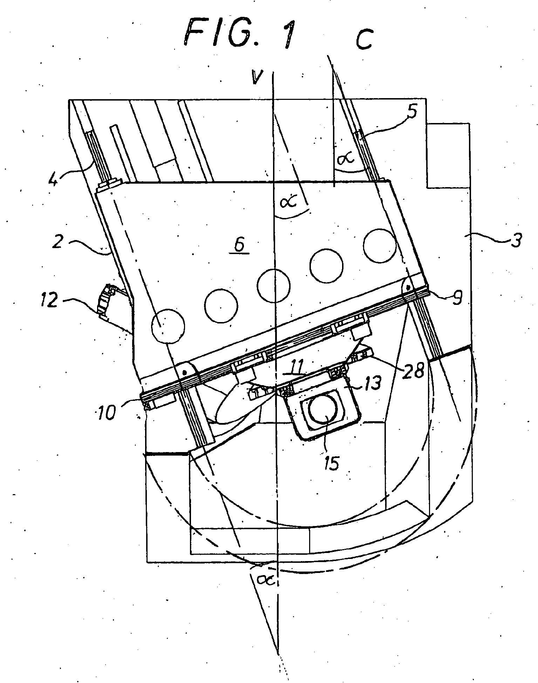

Die in Fig. 1 in verschiedenen Ansichten dargestellte Werkzeugm a-schine ist in Gantry-Bauweise ausgeführt und verfügt über - nicht dargestellte - Programm-Steuereinheiten sowie auch über z.B. Werkzeugwechsler und andere Zusatzaggregate. Ein Maschinengestell 1 ist zur Erzielung der gewünschten hohen Steifigkeit vorzugsweise in Integralbauweise ausgebildet. Zwei Seitenwände 2, 3 erstrecken sich parallel zur Y-Koordinatenachse und tragen auf ihrer Oberseite horizontale Führungsschienen 4, 5 als Teil von Linearführungen für einen Querschlitten 6, der über Führungsschuhe 7, 8 auf den Fü h-rungsschienen 4, 5 verfahrbar geführt ist. Als Antriebe für die Ve r-fahrbewegungen des Querschlittens 6, der eine die beiden Seitenwände 2, 3 überspannene Traverse darstellt, werden E-Motoren mit Spindeltrieben oder elektrische Linearmotoren eingesetzt. An der Stirnseite des Querschlittens 6 ist in zwei vertikal voneinander beabstandeten Führungsschienen 9, 10 ein Schlitten 11 horizontal und quer zu den beiden Führungsschienen 4, 5 mittels eines motorischen Antriebsaggregates 12 verfahrbar geführt. In vertikalen Linearführungen an der Frontseite des Schlittens 11 ist ein Vertikalschlitten 13 motorisch verfahrbar, der eine Bearbeitungseinheit 14 mit einer Arbeitsspindel 15 trägt.

Nach einem Merkmal der Erfindung ist die in Fig. 1a dem Betrachter zugekehrte Seitenwand 3 des Maschinengestells 1 kürzer als die g e-genüberliegende Seitenwand 2. Weiterhin sind die beiden Führung s-schienen 4, 5 der auf den beiden Seitenwänden 2, 3 oberse itigen Linearführungen unter einem spitzen Winkel α von etwa 15 bis 45° zu der vertikalen Längsebene V des Maschinengestells 1 bzw. zur Y-Koordinatenachse ausgerichtet, wie dies in Fig. 1c dargestellt ist.

Der Unterbau des Maschinengestells wird von ein em Maschinenbett 18 gebildet, das sich in Form einer flachen Wanne zwischen einer Rückwand 16 und den beiden Seitenwänden 2, 3 bis vor das frontseitige Ende der beiden Seitenwände erstreckt und vorderseitig von einem erhöhten Rand 17 umgeben ist. Dieses wannenförmige Bett 18 dient nicht nur als formsteifes Auflager und zur festen ggf. integralen Verbindung der Seitenwände 2 und 3, sondern kann auch ein Sammelbecken für Späne und Betriebsflüssigkeiten bilden. Zubeiden Seiten und stirnseitig ist dieses wannenförmige Bett 18 von dem durchgehenden erhöhten Rand 17 begrenzt. Die Seitenwände und der vorderseitige Rand stützen sich über - nicht dargestellte - Füße auf dem Boden ab. Bei dem dargestellten Ausführungsbeispiel ist auf dem Bett 18 ein Sockel 19 angeordnet, der mit der längeren Seitenwand 2, mit der Rückwand 16 und auch mit dem bettartigen Boden 18 fest verbunden ist. Unterhalb eines oberen verdickten En d-bereiches 20 der längeren Seitenwand 2 ist eine nach innen weise n-de Ausnehmung 21 ausgebildet.

Der Sockel 19 weist eine unter einem Winkel von 35 bis 60° nach vorn oben in den Innenraum des Maschinengestells 1 weisende Schrägfläche 23 auf, die eine Auflagerfläche zur motorisch verdrehbaren Abstützung eines ringscheibenförmigen Konsolenfußes 24 bildet, der Teil einer Konsole 25 ist. An einem auskragenden Tragarm 26 dieser Konsole 25 ist oberseitig ein Drehtisch 27 und auf diesem eine Werkstück-Spannplatte 28 montiert. Im Innenraum des Tragarms 26 und zumindest teilweise auch im Drehtisch 27 kann ein elektrischer Antriebsmotor, z.B. ein leistungsfähiger Torque-Motor, eingebaut sein, mit dem der Drehtisch 27 mit der Spannplatte 28 und einem darauf montierten Werkstück in Drehung versetzt und auch wirksam arretiert werden kann. Von besonderem Vorzug ist für ein solches Konsolenkonzept die Möglichkeit, den elektrischen Antriebsmotor als leistungsstarken Torque-Motor auszuführen, dem eine ausreichende Bauhöhe zugestanden werden kann. Dadurch lassen mit der dargestellten Konsolenkonzeption Fräs- und auch Dreharbeiten an einem Werkstück in der gleichen Aufspannung mit ausreichend hohen Spanleistungen durchführen.

Die vorstehend beschriebene Ausführung der erfindungsgemäßen Werkzeugmaschine in Gantry-Bauweise hat einen gegenüber he r-kömmlichen vergleichbaren Maschinen wesentlich vergrößerten Zugänglichkeitsbereich, der in Fig. 1c durch den strichpunktiert dargestellten Kreisbogen angedeutet ist. Wie dargestellt erstreckt sich dieser Zugangsbereich zwischen den beiden frontseitigen Stirnkanten der Seitenwände 2, 3. Die Vergrößerung wird erfindungsgemäß durch die Verkürzung der einen Seitenwand 3 gegenüber der and e-ren Seitenwand 2 und durch die damit kombinerte Schrägstellung der Führungsschienen 4, 5 zur Vertikalen V erreicht, und zwar ohne dass die sonstigen Vorzüge der Gantry-Bautweise, wie hohe Stabilität und Bearbeitungsgenauigkeit der Werkzeugmaschine, beeinträchtigt würden.

Ferner ergibt sich der aus Fig. 1c ersichtliche Vorteil dieses Ausführungsbeispiels, dass der traversenartige Querschlitten 6 in Draufsicht die Form eines Trapezes hat und dass die längere - in Fig. 1c linke - Auflageseite diese trapezförmigen Querschlittens 6 eine wesentlich größere Führungslänge als ein herkömmlicher in Draufsicht rechteckiger Schlitten hat. Dadurch wird eine erheblich verbesserte Führungsstabilität und Biegesteifigkeit des Querschlittens und damit auch der mit diesem mechanisch und funktional gekoppelten weiteren Schlitten erreicht.

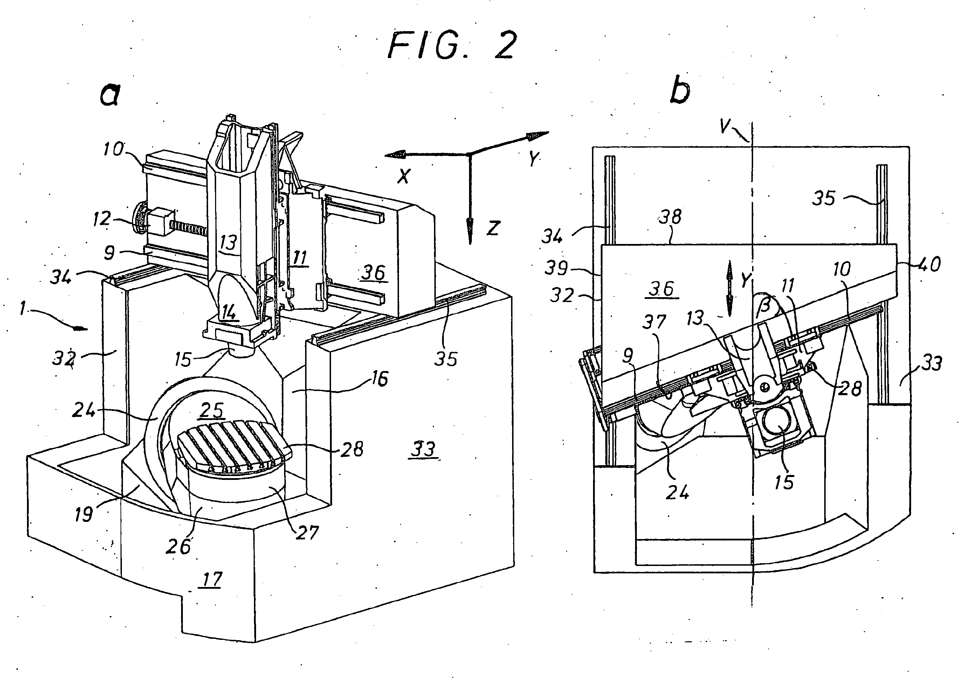

Die in Fig. 2a, b dargestellte Werkzeugmaschine in Gantry-Bauweise entspricht hinsichtlich ihres technischen Konzeptes dem Ausführungsbeispiel nach Fig. 1. Dementsprechend sind gleiche oder fun k-tionsgleiche Bauteile bei dem Ausführungsbeispiel nach Fig. 2 mit den gleichen Bezugszeichen wie beim Ausführungsbeispiel nach Fig. 1 bezeichnet.

Gemäß Fig. 2a enthält das Maschinengestell 1 zwei zueinander parallele Seitenwände 32, 33, die frontseitig durch den erhöhten Rand 17 des gegenüber den Seitenwänden 32, 33 über einen stirnseitigen Wandabsatz niedrigeren Vorbaus miteinander verbunden sind. Auf der Oberseite der beiden Seitenwände 32, 33 sind zwei Führung s-schienen 34, 35 montiert, die bei diesem Ausführungsbeispiel j e-weils parallel zur Längsrichtung der Seitenwände in Richtung der vertikalen Mittelebene V und damit der Y-Koordinatenachse verlaufen. Auf diesen beiden Führungsschienen 34, 35 ist ein Querschli t-ten 36 in Richtung der Y-Koordinatenachse motorisch verfahrbar geführt, an dessen Stirnseite - wie beim Ausführungsbeispiel nach Fig. 1 - der Schlitten 11 mittels eines Motorantriebs 12 und an diesem der Vertikalschlitten 13 mit der Bearbeitungseinheit 14, 15 verfah r-bar angeordnet sind. Auch bei diesem Ausführungsbeispiel ist auf dem Boden des Maschinengestells 1 ein Sockel 19 angeordnet, der mit der in Fig. 1a hinteren Seitenwand 32 sowie mit der Rückwand 16 des Maschinengestells einteilig ausgeführt oder fe st verbunden ist. Auf einer Schrägfläche dieses Sockels 19 ist ein Schwenk-Dreh-Werkstücktisch montiert, wie er vorstehend anhand der Figuren 1a und 1b beschrieben ist und der die dort angegebenen Bauteile 24 bis 28 enthält. Der Schrägungswinkel dieser Schrägfläche des Sockels 19 kann im Bereich zwischen 35 und 60° liegen. Die Festlegung dieses Schrägwinkels richtet sich nach der Position und Ausrichtung des Sockels 19 im Bereich zwischen den Seitenwänden, d.h. mittige oder seitlich versetzte Position und/oder Ausrichtung des Sockels 19 z.B. zum Spanen in überkippten Lagen.

Wie insbesondere aus der Draufsicht nach Fig. 2b ersichtlich, hat auch bei diesem Ausführungsbeispiel der Querschlitten 36 eine Trapezform, wobei seine längere Auflageseite über entsprechend bea b-standete Schuhe auf der linken Führungsschiene und seine kürzere Auflageseite auf der rechten Führungsschiene aufliegen. Da beide Führungsschienen parallel zur Y-Koordinatenachse ausgerichtet sind, vollzieht sich auch die Bewegung des trapezförmigen Querschlitten 36 in Richtung Y-Achse. Auch bei diesem Ausführungsbeispiel ist die rechte Seitenwand 33 gegenüber der linken Seitenwand 32 frontseitig verkürzt, sodass sich von rechts schräg vorne ein vergrößerter Zugangsbereich zum Werkstücktisch bzw. zum Arbeitsraum der Maschine ergibt, was die Be- und Entladung des Tischs durch mechanische Ladevorrichtungen erleichtert. Ein weitere Ursache für diesen vergrößerten Zugangsbereich besteht in der Trapezform des Querschlittens, dessen vordere Stirnkante unter einem spitzen Winkel β von 15 bis 45° zur vertikalen Querebene des Maschinengestells 1 und damit zur X-Koordinatenachse verläuft. Entsprechend sind auch die beiden Führungsschienen 9, 10 an der Stirnseite des Querschlittens 36 unter dem Winkel β zur Querebene ausgerichtet. Die hintere Stirnkante 38 des Querschlittens 36 verläuft quer zur Mittelebene V und damit auch zur Y-Koordinatenachse, wie dies in Fig. 2b dargestellt ist. Die beiden Seitenkanten 39, 40 des Querschlittens 36 verlaufen parallel zu den beiden Fü h-rungsschienen 34, 35 in Richtung der Y-Koordinatenachse. Zur Erzielung einer effektiven Führung ist die längere Seite 39 des Querschlittens 36 über zwei oder mehr Führungsschuhe auf der Führungsschiene 34 abgestützt, wobei die Abstützung der schmaleren rechten Seite 40 des Querschlittens 36 auf der rechten Führung s-schiene 35 über nur einen oder ggf. zwei Führungsschienen erfolgen kann.

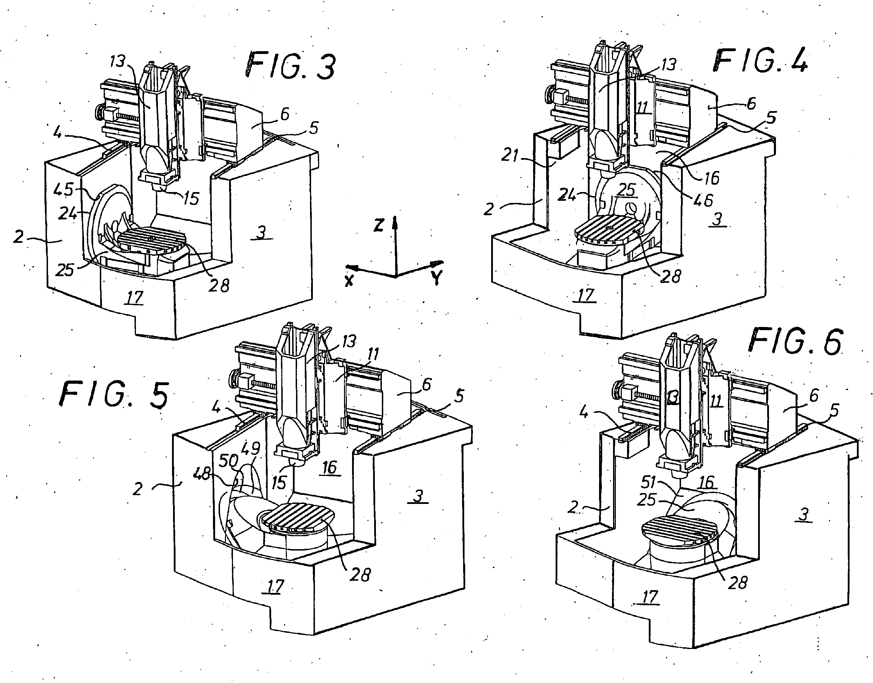

Die in den Figuren 3 bis 6 dargestellten Ausführungsbeispiele der erfindungsgemäßen Werkzeugmaschine entsprechen in ihrer technischen Konzeption dem Ausführungsbeispiel nach Fig. 1, und zwar insbesondere hinsichtlich der Schrägausrichtung der beiden auf den Oberseiten der Seitenwände montierten Führungsschienen 4, 5 und damit auch des Querschlittens 6, wobei allerdings auch bei diesen Ausführungen das in Fig. 2a, 2b dargestellte technische Konzept Anwendung finden kann. Unterschiedlich zum Ausführungsbeispiel nach Fig. 1 ist bei den Ausführungsbeispielen nach Fig. 3 bis 6 die Positionierung der jeweils als Schwenk-Dreh-Tisch ausgebildeten Werkstückaufnahme im jeweiligen Maschinengestell.

Bei dem Ausführungsbeispiel nach Fig. 3 sind die beiden Seitenwände 2, 3 des Maschinengestells parallel zur Vertikalebene des Gestells und damit auch zur Y-Koordinatenachse ausgerichtet, während die auf ihren Oberseiten montierten Führungsschienen 4, 5 unter dem in Fig. 1c dargestellten Winkel α verlaufen. Dementsprechend verfährt auf den Führungsschienen 4, 5 auch der in Draufsicht trapezförmige Querschlitten 6 und die an diesen angeschloss e-ne Bearbeitungseinheit 13 mit der Spindel 15. Bei der Ausführung nach Fig. 3 ist die Werkstückaufnahme-Konstruktion nicht wie bei der Ausführung nach Fig. 1 auf der oberen Schrägfläche eines b o-denseitigen Sockels abgestützt, sondern der kreisscheibenförmige Fuß 24 einer Konsole 25 ist in einer an der Innenseite der Seitenwand 2 vorgesehen Ausnehmung 45 mittels einer geeigneten - nicht dargestellten - Lageranordnung drehbar gelagert. Im Inneren der Seitenwand 2 können geeignete Lagerelemente zur Aufnahme von Axial-, Radial und Kippbelastungen sowie auch geeignete Antrieb s-einheiten, wie Getriebemotoren oder elektrische Direktantriebe, ei n-gebaut sein. Diese bekannten Tischkonstruktionen wurden jedoch bisher aus betriebstechnischen und Platzgründen nicht in Werkzeugmaschinen der Gantry-Bauweise eingesetzt.

Das Ausführungsbeispiel nach Fig. 4 unterscheidet sich von der Ausführung nach Fig. 3 lediglich dadurch, dass die Werkstückaufnahmeeinheit 24 bis 28 in der vertikalen Rückwand 16 des Maschinengestells 2 motorisch verdrehbar angeordnet und gelagert ist. Die Anordnung des verdrehbaren Konsolenfußes 24 in der Rückwand 16 des Maschinengestells ist im Hinblick auf den Späneanfall besonders günstig, da Späneablagerungen in kritischen Bereichen ve r-mieden werden. Darüber hinaus können auch besonders leistung s-fähige Antriebsaggregate und stabile Lagerungen für die Konsole 25 bzw. deren Konsolenfuß 24 der Werkstückaufnahmeeinheit verwendet werden, da diese Aggregate nach rückwärts aus dem Maschinengestell 2 herausragen können.

Das Ausführungsbeispiel nach Fig. 5 entspricht weitestgehend dem Ausführungsbeispiel nach Fig. 3, insbesondere bezüglich der Anordnung der Seitenwände 2, 3 mit den Führungsschienen 4, 5 und der Schlittenanordnung 6, 11, 13 mit der Arbeitsspindel 15. Auch bei diesem Ausführungsbeispiel ist die Werkstückaufnahmeeinheit 24 - 28 an bzw. in der Seitenwand 2 des Maschinengestells positioniert. Allerdings ist bei diesem Ausführungsbeispiel an der in den Innenraum weisenden Wandfläche der Seitenwand 2 eine Aushöhlung 48 ausgebildet, die einen unter einem spitzen Winkel zur Vertikalen g e-neigten Boden 49 als Auflagefläche für einen Konso lenfuß 50 aufweist. Vorteilhaft bei diesem Ausführungsbeispiel ist der besonders weite Zugangsbereich zum Werkstücktisch 28 bzw. zum Arbeitsraum unterhalb der Arbeitsspindel 15. Diese Werkstückaufnahmeeinheit 24 bis 28 und die Aushöhlung 48 mit ihrem Boden 49 können auch in einem Eckbereich des Maschinengestells, d.h. in dem Übergangsbereich einer Seitenwand 2 in die Rückwand 16 angeor d-net werden, wodurch sich überkippte Bearbeitungsvorgänge erre i-chen lassen.

Bei dem in Fig. 6 dargestellten Ausführungsbeispiel wird eine Werkstückaufnahmeinheit nach Fig. 5 verwendet, die jedoch auf einer Schrägfläche 51 am unteren Teil der Rückwand 16 des Maschinengestells angeordnet ist.

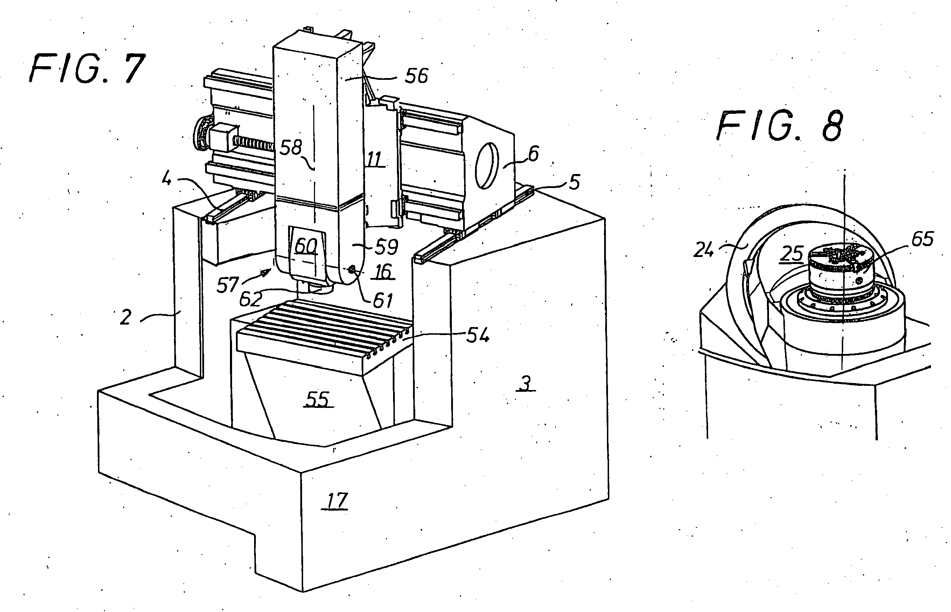

Beim Ausführungsbeispiel nach Fig. 7 handelt es sich ebenfalls um eine Werkzeugmaschine in Gantry-Ausführung mit einem der Ausführung nach Fig. 1 entsprechenden Maschinengestell 1 und einer zugehörigen Schlittenkonstruktion 6-13. Die Werkstückaufnahmeeinheit enthält bei der Ausführung nach Fig. 7 jedoch einen ortsfe s-ten Werkstücktisch 54, der auf einer an der Gestellrückwand 16 befestigten Konsole 55 angeordnet ist. Am unteren Ende eines Vert i-kalschlittens 56 ist als Bearbeitungseinheit ein Schwenk-Dreh-Kopf 57 angeordnet, der um eine Vertikalachse 58 drehen kann. Eine zweiarmige Gabel 59 ist um die Vertikalachse 58 motorisch verdrehbar. Zwischen den beiden Armen der Gabel 59 ist ein Drehkopf 60 um eine Horizontalachse 61 schwenkbar gelagert, der eine Arbeit s-spindel 62 aufnimmt. Auch mit dieser Werkzeugmaschine ist eine 5 - Achs-Bearbeitung von Werkstücken möglich, und zwar aufgrund der Dreh- und Schwenk-Möglichkeiten des Bearbeitungskopfes 60. Die Vorteile der Gantry-Bauweise und auch der erweiterte Zugang zum Werkstücktisch 54 sind die besonderen Merkmale auch dieser Maschine.

Bei den Ausführungsbeispielen nach Fig. 1 bis 7 ist die Werkstückaufnahmeeinheit jeweils als Schwenk-Dreh-Tisch ausgebildet, was die Möglichkeit der 5-Achs-Bearbeitung von Werkstücken ermöglicht. Je nach Antriebsleistung und Stabilität der jeweiligen Lageranordnung können auch Dreharbeiten mit erheblichen Spanlei s-tungen an Werkstücken in der gleichen Aufspannung durchgeführt werden. In Fig. 8 ist eine weitere Werkstückaufnahmeinheit darg e-stellt, die eine auf einem 45° -Auflageebene verdrehbare Konsole 25 mit einem kreisringförmigen Auflagefuß 24 enthält. Statt der bei den vorstehend beschriebenen Ausführungsbeispielen verwendeten Tischplatte 28 zum Fixieren von Werkstücken ist bei der Ausführung nach Fig. 8 ein Spannfutter 65 vorgesehen, in welchem zylindrische bzw. stangenförmige Werkstücke für eine Dreh- und/oder Fräsbearbeitung eingespannt werden können.

## Patentansprüche

1. Werkzeugmaschine mit
- einem Maschinengestell (1), das formsteife Seitenwände (2, 3) mit oberseitigen horizontalen Linearführungen (4, 5) aufweist,
- einem an den Linearführungen (4, 5) der Seitenwände (2, 3) verfahrbaren Kreuzschlitten (6, 11), an dessen Frontseite eine Bearbeitungseinheit (14) mit einem Spindelkopf (15) vertikal verfahrbar geführt ist, und
- einer im Raum zwischen den Seitenwänden (2, 3) angeordneten Werkstückaufnahmeeinheit (24-28),
**dadurch gekennzeichnet, dass**
- die Linearführungen (4, 5) auf den Seitenwänden (2, 3) des Maschinengestells (1) unter einem spitzen Winkel von etwa 15° bis 45° zur vertikalen Längsebene V des Maschinengestells (1) ausgerichtet sind und
- zur Bildung eines vergrößerten Zugangs zum Arbeitsraum eine Seitenwand (3) frontseitig kürzer als die andere Seitenwand (2) ist.

2. Werkzeugmaschine nach dem Oberbegriff des Patentanspruchs 1,
**dadurch gekennzeichnet, dass**
- die beiden Linearführungen (4, 5) parallel zur vertikalen Längsebene V des Maschinengestells (1) und damit zur Y-Koordinatenachse verlaufen,
- die vordere Stirnkante (37) des Querschlittens (36) unter einem spitzen Winkel von 15° bis 45° schräg zur vertikalen Querebene des Maschinengestells (1) verläuft und
- die eine Seitenwand (33) des Maschinengestells kürzer als die andere Seitenwand (32) ist, wodurch ein vergrößerter Zugang zum Werkstücktisch (28) bzw. zum Arbeitsraum der Maschine entsteht.

3. Werkzeugmaschine nach Anspruch 1 oder 2,
**dadurch gekennzeichnet, dass**
das Maschinengestell einen bettartigen Unterbau (17) mit durchgehendem Bett (18) sowie eine mit den beiden Seitenwänden (2, 3; 32, 33) und mit dem Unterbau (17) fest verbundene formstabile Rückwand (16) aufweist.

4. Werkzeugmaschine nach einem der vorstehenden Ansprüche,
**dadurch gekennzeichnet, dass**
der bettartige Unterbau (17) eine Bodenwanne als Spänesammler begrenzt.

5. Werkzeugmaschine nach einem der vorstehenden Ansprüche, **dadurch gekennzeichnet, dass**
der auf den beiden Linearführungen (4, 5; 34, 35) verfahrbar abgestützte Querschlitten (6, 36) eine - in Draufsicht - Trapezform hat, wobei die kürzere Auflageseite des Querschlittens (6, 36) der kürzeren Seitenwand (3, 33) und seine längere Auflageseite der längeren Seitenwand (2, 32) zugehört.

6. Werkzeugmachine nach einem der Ansprüche 1 und 3-5,
**dadurch gekennzeichnet, dass**
die Stirnkante des trapezförmigen Querschlittens (6) rechtwinklig zu den Führungsschienen (4, 5) und damit unter einem spitzen Winkel von 15° bis 45° schräg zur vertikalen Querebene des Maschinengestells (1) verläuft.

7. Werkzeugmaschine nach einem der Ansprüche 2 bis 5,
**dadurch gekennzeichnet, dass**
die Stirnkante (37) des Querschlittens (36) schräg zu den Führungsschienen (34, 35) und damit schräg zur Y-Koordinatenachse verläuft.

8. Werkzeugmaschine nach einem der Ansprüche 1 bis 7,
**dadurch gekennzeichnet, dass**
die Werkstückaufnahmeeinheit (24-28) als Schwenk-Drehtisch ausgebildet ist und eine schwenkbare Konsole (25) aufweist, die ein abgewinkeltes Auflager für einen Werkstück-Drehtisch (28) bildet.

9. Werkzeugmaschine nach Anspruch 8,
**dadurch gekennzeichnet, dass**
die Konsole (25) um eine erste Rundachse motorisch verschwenkbar ist und einen eingebauten Antriebsmotor enthält, der den Drehtisch (28) um eine zweite Rundachse drehen kann.

10. Werkzeugmaschine nach einem der Ansprüche 8 oder 9,
**dadurch gekennzeichnet, dass**
die Konsole (25) des Drehtisches (28) mittels ihres Konsolenfußes (24) in oder an einer Seitenwand (2) oder an der Rückwand (16) des Maschinengestells (1) um die erste Rundachse verschwenkbar gelagert und gehalten ist.

11. Werkzeugmaschine nach Anspruch 10,
**dadurch gekennzeichnet, dass**
in der einen Seitenwand (2, 3) oder in der Rückwand (16) des Maschinengestells (1) eine zum Arbeitsraum hin offene Ausnehmung (45) angeordnet ist, in welcher der kreisscheibenförmige Fuß (24) der Konsole (25) auf einer Lageranordnung motorisch verdrehbar gelagert ist.

12. Werkzeugmaschine nach Anspruch 10 oder 11,
**dadurch gekennzeichnet, dass**
die Lageranordnung einen-Lagerzapfen oder ein an einem Hohlzylinder angreifendes Axial-Radiallager aufweist.

13. Werkzeugmaschine nach einem der Ansprüche 10 bis 12,
**dadurch gekennzeichnet, dass**
in der einen Seitenwand (2) oder in der Rückwand (16) eine Aushöhlung (48) mit geneigtem Boden (49) als schräge Auflagefläche zur Abstützung des Konsolenfußes (50) ausgebildet ist.

14. Werkzeugmaschine nach Anspruch 8 oder 9,
**dadurch gekennzeichnet, dass**
das Maschinengestell (1) einen bettartigen Boden (18) aufweist, auf dem ein Sockel (19) als Träger für die Konsole (25) der Werkstückaufnahmeeinheit (24-28) vorgesehen ist.

15. Werkzeugmaschine nach Anspruch 14,
**dadurch gekennzeichnet, dass**
der Sockel (19) eine Schrägfläche (23) aufweist, die eine Auflagefläche für den verdrehbaren Konsolenfuß (24) der Konsole (25) bildet.

16. Werkzeugmaschine nach Anspruch 14 oder 15,
**dadurch gekennzeichnet, dass**
der Sockel (19) mit dem Boden (18) und mit mindestens einer Wand (2, 3, 16) des Maschinengestells fest verbunden ist.

17. Werkzeugmaschine nach einem der Ansprüche 14-16,
**dadurch gekennzeichnet, dass**
der Sockel (19) in einem Eckbereich des Maschinengestells (1) mit in den vorderen Innenraum weisender Auflagefläche (23) angeordnet ist.

18. Werkzeugmaschine nach einem der Ansprüche 1 bis 17,
**dadurch gekennzeichnet, dass**
die Werkstückaufnahmeeinheit statt eines Werkstück-Drehtisches (28) ein Spannfutter (65) aufweist.

19. Werkzeugmaschine nach einem der Ansprüche 1 bis 7,
**dadurch gekennzeichnet, dass**
die Bearbeitungseinheit einen Schwenk-Dreh-Kopf (57) mit eingebauter Motorspindel (62) enthält und die Werkstückaufnahmeeinheit ein ortsfester Werkstücktisch (54) ist.

20. Werkzeugmaschine nach Anspruch 19,
**dadurch gekennzeichnet, dass**
der Schwenk-Drehkopf (57) eine um eine vertikale Achse (58) verdrehbare Gabel (59) aufweist, zwischen deren beiden Armen ein die Arbeitsspindel (62) tragender Drehkopf (60) motorisch verschwenkbar gelagert ist.

## Claims

1. A machine tool, comprising
- a machine frame (1) which has dimensionally rigid side walls (2, 3) with horizontal linear guides (4, 5) on the upper side,
- a compound slide (6, 11) which is movable along the linear guides (4, 5) of the side walls (2, 3) and at the end face of which a machining unit (14) having a spindle head (15) is guided so as to be vertically movable, and
- a workpiece holder unit (24-28) arranged in the space between the side walls (2, 3),
**characterized in that**
- the linear guides (4, 5) on the side walls (2, 3) of the machine frame (1) are aligned at an acute angle of approximately 15° to 45° relative to the vertical longitudinal plane v of the machine frame (1), and
- a side wall (3) on the front side is shorter than the other side wall (2) so as to form a greater access to the work space.

2. The machine tool according to the preamble of claim 1, **characterized in that**
- the two linear guides (4, 5) extend parallel to the vertical longitudinal plane V of the machine frame (1) and thus to the Y-coordinate axis,
- the front end edge (37) of the compound slide (36) extends at an acute angle of 15° to 45° in inclined fashion with respect to the vertical transversal plane of the machine frame (1) and
- one side wall (33) of the machine frame is shorter than the other side wall (32) so as to create an enlarged access to the workpiece table (28) or to the work space of the machine,

3. The machine tool according to claim 1 or 2,
**characterized in that**
the machine frame has a bed-type substructure (17) having a continuous bed (18) and a dimensionally stable rear wall (16) firmly connected to the two side walls (2, 3; 32, 33) and to the substructure (17).

4. The machine tool according to any of the preceding claims,
**characterized in that**
the bed-type substructure (17) confines a floor tray as a chip collector.

5. The machine tool according to any of the preceding claims,
**characterized in that**
the cross slide (6, 36) supported in movable fashion on the two linear guides (4, 5; 34, 35) has a trapezoidal shape - in a top view -, wherein the shorter support side of the cross slide (6, 36) belongs to the shorter side wall (3, 33) and the longer support side thereof belongs to the lounger side wall (2, 32).

6. The machine tool according to any of claims 1 and 3-5,
**characterized in that**
the end edge of the trapezoidal cross slide (6) extends at right angles relative to the guide rails (4, 5) and thus at an acute angle of 155° to 45° in an inclined fashion relative to the vertical transversal plane of the machine frame (1).

7. The machine tool according to any of claims 2 to 5,
**characterized in that**
the end edge (37) of the cross slide (36) extends in inclined fashion to the guide rails (34, 35) and thus in inclined fashion to the Y-coordinate axis.

8. The machine tool according to claims 1 to 7,
**characterized in that**
the workpiece holder unit (24-28) is made as a swiveling rotary table and a swiveling knee (25) which forms an angled support for a workpiece rotary table (28).

9. The machine tool according to claim 8,
**characterized in that**
the knee (25) can be swiveled about a first rotary axis by means of a motor and contains an installed drive motor which can turn the rotary table (28) about a second rotary axis.

10. The machine tool according to claim 8 or 9,
**characterized in that**
the knee (25) of the rotary table (28) is swivel-mounted about the first rotary axis and held by means of the knee base (24) thereof in or at a side walls (2) or at the rear wall (16) of the machine frame (1).

11. The machine tool according to claim 10,
**characterized in that**
a recess (45) which is open towards the work space is arranged in one side wall (2, 3) or in the rear wall (16) of the machine frame (1), wherein the circular disk-shaped base (24) of the knee (25) is rotatably mounted on the bearing arrangement by means of a motor.

12. The machine tool according to claim 10 or 11,
**characterized in that**
the bearing arrangement has a bearing journal or an axial radical bearing engaging a hollow cylinder.

13. The machine tool according to any of claims 10 to 12,
**characterized in that**
in one side wall (2) or in the rear wall (16) a cavity (48) having an inclined bottom (49) is made as an inclined support area to support the knee base (50).

14. The machine tool according to claim 8 or 9,
**characterized in that**
the machine frame (1) has a bed-type bottom (18) on which a base (19) is provided as a carrier for the knee (25) of the workpiece holder unit (24-28).

15. The machine tool according to claim 14,
**characterized in that**
the basis (19) has an inclined plane (23) which forms a support area for the twistable knee base (24) of the knee (25).

16. The machine tool according to claim 14 or 15,
**characterized in that**
the knee (19) is firmly connected to the bottom (18) and to at least one wall (2,3, 16) of the machine frame.

17. The machine tool according to any of claims 14-16,
**characterized in that**
the knee (19) is arranged in a corner region of the machine frame (1) with a support area (23) facing the front inner space.

18. The machine tool according to any of claims 1 to 17,
**characterized in that**
the workpiece support unit has a chuck (65) instead of a workpiece rotary table (28).

19. The machine tool according to any of claims 1 to 7,
**characterized in that**
the machining unit contains a swiveling rotary head (57) with installed motor spindle (62) and the workpiece support unit is a stationary workpiece table (54).

20. The machine tool according to claim 19,
**characterized in that**
the swiveling rotary head (57) has a fork (59) which is twistable about a vertical axis (58) and between the two arms of which a rotary head (60) supporting the work spindle (62) is swivel-mounted by means of a motor,

## Revendications

1. Machine-outil avec
- un bâti de machine (1) présentant des parois latérales indéformables (2, 3) équipées de rails de guidage horizontaux supérieurs (4, 5),
- un chariot croisé (6, 11) pouvant se déplacer sur les rails de guidage linéaires (4, 5) des parois latérales (2, 3) et dont la face avant comprend un outil d'usinage (14) muni d'une tête de broche (15) et guidé en déplacement vertical, et
- un outil récepteur de pièces (24-28) placé dans l'espace situé entre les parois latérales (2, 3),
**caractérisée en ce que**
- les rails de guidage linéaires (4, 5) placés sur les parois latérales (2, 3) du bâti de la machine (1) forment un angle aigu d'environ 15° à 45° avec le plan longitudinal V du bâti de la machine et
- une paroi latérale (3) est plus courte que l'autre paroi latérale (2) au niveau de la face avant afin de former un accès élargi à l'espace de travail.

2. Machine-outil selon le préambule de la revendication 1, **caractérisée en ce que**
- les deux rails de guidage linéaires (4, 5) sont parallèles au plan longitudinal vertical V du bâti de la machine (1) et donc à l'axe des coordonnées Y,
- le bord avant (37) du chariot transversal (36) forme un angle aigu de 15° à 45° avec le plan transversal vertical du bâti de la machine (1) et
- une paroi latérale (33) du bâti de la machine (1) est plus courte que l'autre paroi latérale (32), ce qui crée un accès élargi à la table porte-pièce (28) ou à l'espace de travail de la machine.

3. Machine-outil selon les revendications 1 ou 2,
**caractérisée en ce que**
le bâti de la machine présente une infrastructure de type table (17) comportant une table continue (18) et une paroi arrière (16) indéformable solidaire des deux parois latérales (2, 3 ; 32, 33) et de l'infrastructure.

4. Machine-outil selon l'une quelconque des revendications précédentes,
**caractérisée en ce que**
l'infrastructure de type table (17) est limitée par une cuve de fond récupératrice de copeaux.

5. Machine-outil selon l'une quelconque des revendications précédentes,
**caractérisée en ce que**
le chariot transversal (6, 36) pouvant être déplacé en appui sur les deux rails de guidage latéraux (4, 5 ; 34, 35) présente - vu de dessus - une forme trapézoïdale, le côté d'appui le plus court du chariot transversal (6, 36) correspondant à la paroi latérale la plus courte (3, 33) et son côté d'appui le plus long à la paroi latérale la plus longue (2, 32).

6. Machine-outil selon l'une quelconque des revendications 1 et 3 à 5,
**caractérisée en ce que**
le bord avant du chariot transversal de forme trapézoïdale (6) forme un angle droit avec les rails de guidage (4, 5) et donc un angle aigu de 15° à 45° avec le plan transversal vertical du bâti de la machine (1).

7. Machine-outil selon l'une quelconque des revendications 2 à 5,
**caractérisée en ce que**
le bord avant (37) du chariot transversal (36) est incliné par rapport aux rails de guidage (34, 35) et donc incliné par rapport à l'axe des coordonnées Y.

8. Machine-outil selon l'une quelconque des revendications 1 à 7,
**caractérisée en ce que**
l'outil récepteur de pièces (24-28) est une table tournante pivotante et présente une console pivotante (25) constituant un support coudé pour une table porte-pièce pivotante (28).

9. Machine-outil selon la revendication 8,
**caractérisée en ce que**
la console (25) peut pivoter de manière motorisée autour d'un premier axe de rotation et contient un moteur d'entraînement intégré pouvant faire pivoter la table tournante (28) autour d'un deuxième axe de rotation.

10. Machine-outil selon l'une quelconque des revendications 8 ou 9,
**caractérisée en ce que**
la console (25) de la table tournante (28) est placée et maintenue au moyen de son pied de console (24) dans ou sur la paroi latérale (2) ou sur la paroi arrière (16) du bâti de la machine (1) et peut pivoter autour du premier axe de rotation.

11. Machine-outil selon la revendication 10,
**caractérisée en ce que**
dans l'une des parois latérales (2, 3) ou dans la paroi arrière (16) du bâti de la machine (1) se trouve un réceptacle ouvert (45) en direction de l'espace de travail, dans lequel le pied en forme de disque circulaire (24) de la console (25) est placé sur un dispositif support et peut tourner de manière motorisée.

12. Machine-outil selon les revendications 10 ou 11,
**caractérisée en ce que**
le dispositif support présente un tourillon ou un palier radial axial agissant sur un cylindre creux.

13. Machine-outil selon l'une quelconque des revendications 10 à 12,
**caractérisée en ce que**
l'une des parois latérales (2) ou la paroi arrière (16) présente un évidement (48) à fond penché (49) servant de surface d'appui inclinée sur laquelle repose le pied de la console (50).

14. Machine-outil selon les revendications 8 ou 9,
**caractérisée en ce que**
le bâti de machine (1) présente un fond de type table (18) sur lequel est prévu un socle (19) servant de support à la console (25) de l'outil récepteur de pièces (24-28).

15. Machine-outil selon la revendication 14,
**caractérisée en ce que**
le socle (19) présente une surface inclinée (23) servant de surface d'appui au pied rotatif (24) de la console (25).

16. Machine-outil selon les revendications 14 ou 15,
**caractérisée en ce que**
le socle (19) est solidaire du fond (18) et d'au moins une paroi (2, 3, 16) du bâti de la machine.

17. Machine-outil selon l'une quelconque des revendications 14 à 16,
**caractérisée en ce que**
le socle (19) est disposé dans un angle du bâti de la machine (1) avec une surface d'appui (23) pointant dans la direction de l'espace intérieur avant.

18. Machine-outil selon l'une quelconque des revendications 1 à 17,
**caractérisée en ce que**
l'outil récepteur de pièces comporte un mandrin (65) en lieu et place d'une table porte-pièce tournante (28).

19. Machine-outil selon l'une quelconque des revendications 1 à 7,
**caractérisée en ce que**
l'outil d'usinage comporte une tête rotative pivotante (57) avec une broche motorisée intégrée (62) et **en ce que** l'outil récepteur de pièces est une table porte-pièce fixe (54).

20. Machine-outil selon la revendication 19,
**caractérisée en ce que**
la tête rotative pivotante (57) présente une fourche (59) pouvant tourner autour d'un axe vertical (58) entre les deux dents de laquelle se trouve une tête rotative (60) supportant la broche (62) et pouvant pivoter de manière motorisée.
